# EUROPÄISCHE PATENTSCHRIFT

(11) **EP 2 394 253 B1**
(45) Veröffentlichungstag und Bekanntmachung des Hinweises auf die Patenterteilung: **14.11.2012**
(21) Anmeldenummer: 10708690.2
(22) Anmeldetag: 05.02.2010
(51) Int. Cl.: G08B 7/06, G08B 13/196, G08B 25/01, G08B 25/10, H04M 1/725

(54) **NOTRUFGERÄT**
EMERGENCY CALL DEVICE
APPAREIL D'APPELS D'URGENCE

(30) Priorität: 09.02.2009 AT 2112009; 03.03.2009 AT 3462009
(43) Veröffentlichungstag der Anmeldung: 14.12.2011
(73) Patentinhaber: Degelsegger, Walter, 4693 Desselbrunn (AT)
(72) Erfinder: Degelsegger, Walter, 4693 Desselbrunn (AT)
(86) Internationale Anmeldenummer: PCT/AT2010/000035
(87) Internationale Veröffentlichungsnummer: WO 2010/088712

(56) Entgegenhaltungen:
- US-A1- 2005 287 980
- US-B1- 6 278 884
- US-B1- 6 636 732
- US-B1- 6 895 261

## Beschreibung

### Die Erfindung betrifft ein Notrufgerät.

In der Patentliteratur werden eine Reihe von Geräten und damit zusammenhängenden Verfahren und Organisationsmodellen vorgeschlagen, welche für Personen, die in gewaltsamer Weise bedroht oder geschädigt werden oder die als Unbeteiligte Zeuge von kriminellen Handlungen werden, eine Hilfe sein sollen.

Man führt dazu ein einfach zu bedienendes, handliches kleines Gerät mit sich, welches zur Aufzeichnung von Information vom Ort des Geschehens in Form von Bild und/oder Ton und/oder Film fähig ist, welches diese Information, sowie eine Kennungsinformation über den Benutzer dieses Gerätes, sowie eine Information über die Position des Geschehens per Funk an eine entfernt befindliche Station sendet. Von dieser Station aus wird dann Hilfe, wie beispielsweise ein Polizeieinsatz und falls erforderlich ein medizinischer Rettungseinsatz, organisiert und in dieser Station werden die für die juristische Aufarbeitung nützlichen, erhaltenen Daten sicher gespeichert.

Repräsentative Beispiele für derartige Geräte und Organisationsvorschläge sind in den Schriften US 4884132 A, EP 1277333 B1, DE 2910016 A1, EP 617869 B1, DE 10128728 C2, DE 19726357 A1, DE 19836118 A1, DE 29819117 U1, EP 875875 A2 und DE 102006001179 A1 beschrieben.

Die einzelnen Vorschläge unterscheiden sich bezüglich Art, Inhalt und Format der zu übertragenden Daten, bezüglich des vorgeschlagenen Übertragungsnetzes und bezüglich dessen, was genau nach der Datenübertragung geschieht.

Der Großteil der Vorschläge läuft darauf hinaus, dass im Notfall - nicht nur bei Überfällen oder ähnlichem, sondern auch bei medizinischen Notfällen - schnell geholfen werden könnte und dass hilfreiche Beweisinformation gesichert werden könnte. Bisher wurde aber keines der Geräte und keine der damit zusammenhängenden Organisationsformen in nennenswertem Umfang realisiert. Ein wesentlicher Nachteil aller bisherigen genannten Vorschläge ist, dass sie bezüglich kriminellen Vorfällen nur auf eine gute Nacharbeit hinauslaufen, kaum bis gar nicht aber auf deren Vermeidung .

Die Schriften US 2005/387980, US 2003/0137422 A1, US 2007/0200716 A1, US 6 876 302 B1, US 2008/0001764 A1, DE 10 2006 016 924 A1, US 2006/0201964 A1, DE 101 23 341 A1, DE 203 07 641 U1 und EP 1 953 721 A1 zeigen Notrufgeräte der Eingangs genannten Art, welche zusätzliche über eine am Ort des Geschehens wirkende Signaleinrichtung verfügen. Beim Auslösen eines Alarms wird dadurch auch am Ort des Geschehens akustisch und/oder optisch signalisiert, dass ein Notrufgerät vorhanden ist, dass ein Alarm ausgelöst ist und dass Informationen gesendet werden. Neben der automatischen Dokumentation und Meldung von kriminellen Vorfällen (und anderen Notfällen) helfen diese Geräte in erhöhtem Maß auch dabei, kriminelle Vorfälle überhaupt zu vermeiden.

Gemäß der Aufgabe, die der Erfindung zu Grunde liegt, soll ebenfalls ein Notfallgerät geschaffen werden, welches alle wesentlichen Funktionen gemäß dem besprochenen Stand der Technik erfüllt. Darüber hinaus soll es komfortabler mitführbar sein, optisch ansprechender sein können und trotz der für den Alarmfall erforderlichen einfachen und sicheren Auslösbarkeit, eine größere Sicherheit gegen ungewolltes Auslösen aufweisen.

Für das Lösen der Aufgabe wird vorgesehen, ein Notrufgerät so auszuführen, dass es die aus dem Stand der Technik bekannten Funktionen ausführen kann und zusätzlich, dass
- das Notrufgerät Teil eines am Körper eines Menschen zu tragenden Bandes ist,
- dass das Notrufgerät einen äußeren Gehäuseteil und einen innerem Gehäuseteil aufweist, wobei der innere Gehäuseteil durch den äußeren Gehäuseteil umfassbar ist und relativ zum äußeren Gehäuseteil zwischen einer mehr und einer weniger umfassten Stellung beweglich ist und
- dass nur dann, wenn der innere Gehäuseteil relativ zum äußeren Gehäuseteil in der weniger umfassten Stellung ist, die für den Akutfall vorgesehenen Funktionen des Notrufgerätes gestartet werden können.

Es ist vorgesehen, das Notrufgerät zusätzlich zu den bekannten Funktionen Datenaufnahme und Datensendung mit einer Signalfunktion auszustatten durch welche es als Notrufgerät gut erkennbar ist und wodurch erkennbar wird, dass das Gerät aktiviert ist und damit Datenaufzeichnung und Datenübertragung gestartet ist.

Ein erheblicher Anteil von potentiell kriminellen Personen wird eine beabsichtigte bzw. in Durchführung befindliche kriminelle Handlung vermeiden bzw. abbrechen, wenn sie begreifen, dass diese Handlung gut dokumentiert ist und Einsatzkräfte schon informiert sind.

Die Erfindung wird an Hand eines auch mit einer Zeichnung veranschaulichten Ausführungsbeispiels näher erläutert.
- Fig. 1:: zeigt in Schrägrissansicht ein erstes beispielhaftes Notrufgerät.
- Fig. 2:: zeigt in Frontalansicht ein zweites beispielhaftes Notrufgerät.

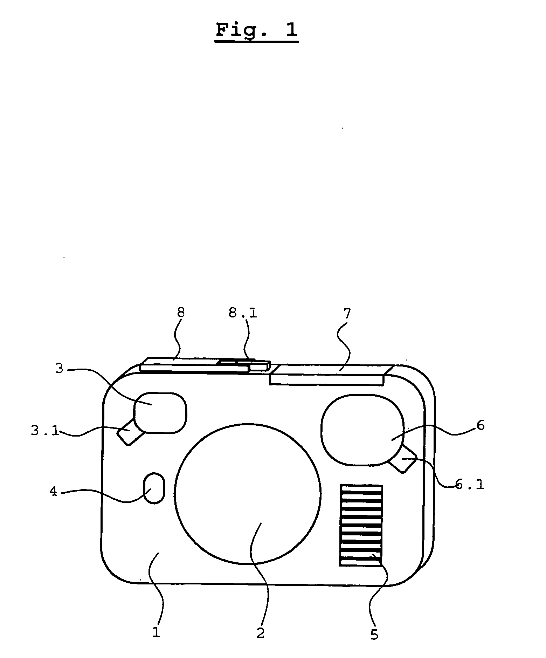

Das Gehäuse 1 des erfindungsgemäßen, beispielhaften Notrufgerätes von Fig. 1 hat etwa die Form eines flachen Prismas, dessen kurze Kanten abgerundet sind. Seine beiden größeren Flächen können etwas größer sein, als die Fläche einer Scheckkarte, beispielsweise 8 mal 5 Zentimeter. Die zu diesen Flächen normal liegende Abmessung des Gehäuses, - also seine Tiefe - liegt typischerweise bei etwa einem Zentimeter, vielleicht auch etwas darunter. Natürlich sind neben der gezeigten flach-prismatischen Form auch andere Formen möglich. An der gezeigten Form ist vorteilhaft, dass sie sich bei gleichem Volumen besser in Kleidung oder in einer kleinen Tasche verstauen lässt als die meisten anderen Formen.

Neben dem Gehäuse 1 sind ganz wesentliche Teile bzw. Funktionen des erfindungsgemäßen Notrufgerätes:

Die digitale Kamera 2 dient dazu, Bilder, Bildfolgen und/oder Filme aufzunehmen. Sie kann wie eine herkömmliche Digitalkamera aufgebaut sein. Wichtig ist, dass sie automatisch fokussiert.

Sehr von Vorteil ist auch eine hohe Tiefenschärfe. Nicht unbedingt so wichtig ist beispielsweise die Farbechtheit der aufgenommenen optischen Information.

Eine Beleuchtungseinrichtung 3 liefert für die Aufnahmen durch die Kamera die notwendige Beleuchtung. Für Fotos ist diese Beleuchtung ein Blitzlicht bzw. eine Folge von Blitzlichtern, für Filmaufnahmen ist diese Beleuchtung ein dauerhaftes Licht. Eine vorteilhafte Zusatzfunktion der Beleuchtungseinrichtung ist es, ein optisches Signal abzugeben, durch welches am Ort des Geschehens signalisiert wird, dass ein Notfall vorliegt und/oder dass das Gerät aktiv ist und das momentane Geschehen erfasst und sendet. Durch eine Taste 3.1, welche im dargestellten Beispiel im Nahbereich der Beleuchtungseinrichtung 3 angebracht ist, kann die Signalfunktion der Beleuchtung geschaltet werden.

Mit Hilfe optischer Sensoren 4 wird die Entfernungsinformation bezüglich einem Objekt zwecks Steuerung der Fokussiereinrichtung der Kamera erfasst und Zwecks passender Ansteuerung der Beleuchtungseinrichtung wird die Umgebungshelligkeit erfasst.

Ein Mikrofon 5 dient zur Aufnahme von Geräuschen aus der Umgebung.

Ein Lautsprecher 6 dient auf jeden Fall dazu, am Ort des Geschehens ein akustisches Signal abzugeben, durch welches signalisiert wird, dass ein Notfall vorliegt und/oder dass das Gerät aktiv ist und das momentane Geschehen erfasst und sendet. Durch Druck auf eine Taste 6.1 kann diese Signalfunktion still geschaltet werden. Über eine Antenne 7 werden die erforderlichen Funkverbindungen hergestellt. Einerseits ist das die Verbindung zu der entfernt befindlichen Station, welche vorzugsweise über ein bestehendes Mobilfunknetz hergestellt wird, andererseits ist dies die erforderliche Funkverbindung zu Referenzstellen wie typischerweise Satelliten eines GPS-Dienstes, mit deren Hilfe die geographischen Koordinaten des Ortes an dem sich das Notrufgerät gerade befindet, festgestellt werden.

Durch Eindrücken des Auslöseknopfes 8 können die für den Einsatzfall vorgesehen Funktionen, nämlich Datenerfassung, Aufbau einer Verbindung zu einer entfernt befindlichen Station und Übersendung der Daten an die entfernt befindliche Station, vor Ort wirkende optische und/oder akustische Signale, ausgelöst werden.

Damit der Auslöseknopf 8 nicht versehentlich gedrückt wird, ist es ratsam dafür wie bei Jagdwaffen eine Sicherungsvorrichtung vorzusehen, welche erst in den Zustand "entsichert" zu stellen ist, bevor der Auslöseknopf 8 gedrückt werden kann. Im dargestellten Beispiel ist die Sicherungsvorrichtung ein Schieber 8.1 der am Auslöseknopf 8 oder an der Bewegungsbahn des Auslöseknopfes 8 im Gehäuse 1 angebracht ist und zwischen einer Stellung in der er die Beweglichkeit des Auslöseknopfes blockiert und einer Stellung in der er die Beweglichkeit des Auslöseknopfes freigibt hin und her geschoben werden kann. Eine mechanische Sicherungsvorrichtung, deren Sinn und Funktion unmittelbar einfach und klar erkennbar ist, ist einer elektronisch realisierten Sicherungsvorrichtung, deren Sinn und Betätigungsweise nur mittelbar erkennbar gemacht werden kann, vorzuziehen.

Nicht in der Zeichnung dargestellt ist die natürlich erforderliche, im Notrufgerät enthaltene Elektronik, mit Hilfe derer die genannten Funktionen sowie die im Folgenden noch aufgelisteten Funktionen in an sich dem Fachmann bekannter Weise verwirklicht werden können.

Weitere zum Teil unverzichtbare, zum Teil optionale ergänzende Funktionen / Bauteile eines erfindungsgemäßen Notrufgerätes, welche in Fig. 1 nicht durch ein sichtbares Merkmal symbolisiert sind, sind:
- Eine Batterie, welche am besten aufladbar ist, ist im Inneren des Gerätes untergebracht. Sie kann durch eine zweite, nicht aufladbare, dafür aber besonders langlebige und besonders robuste (z.B. kälteunempfindliche) Batterie ergänzt werden. Es sollte unbedingt auch eine Anzeigevorrichtung für den Ladestand der Batterien vorgesehen werden, sowie eine Warneinrichtung, welche anspricht, sobald sich der Ladestand dem Ende zu neigt.
- Eine Steckverbindung für den Anschluss der aufladbaren Batterie an eine externe elektrische Energiequelle.
- Eine Steckverbindung für eine Datenleitung zu einem externen Computer, mit Hilfe dessen unter Verwendung eines dazupassenden Programms, Einstellungen des Notrufgerätes editiert werden können.

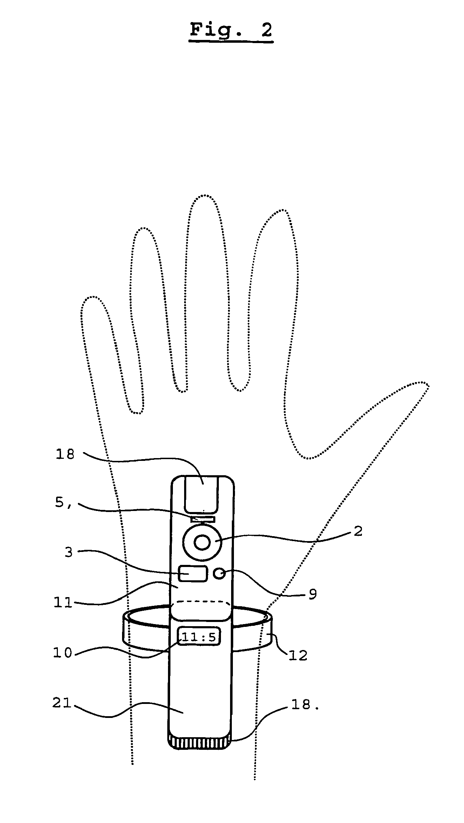

Das in Fig. 2 gezeigte Beispiel eines Notrufgerätes ist Teil eines am Handgelenk zu tragenden Armbandes. Es weist ein äußeres Gehäuse 21 und ein daraus hervor klappbares oder daraus hervor schwenkbares inneres Gehäuse 11 auf. Das äußere Gehäuse kann als schöner Schmuckteil ausgebildet sein und es kann eine elektronische Zeitanzeige 10 einschließlich aller sonstigen Funktionen einer üblichen Armbanduhr beinhalten. Am inneren Gehäuse 11 können wiederum die für die Funktion als Notrufgerät wesentlichen Teile bzw. Funktion - wie schon oben beschrieben - untergebracht sein.

Wenn das Notrufgerät gemäß Fig. 2 an der Handflächenseite des Unterarms getragen wird, das innere Gehäuse 11 von dem im Bereich des Handgelenkes angeordneten, äußeren Gehäuse 21 aus zur Handfläche hin ausfährt und die Auslösetaste am Handflächenseitigen Ende des Gehäuses 11 angebracht ist, so kann die Auslösetaste 18 durch eine Fingerspitze jener Hand ausgelöst werden, an welcher das Notrufgerät getragen wird.

Die Funktion der Auslösetaste 18 sollte vorteilhafter Weise so gesteuert sein, dass die Auslösetaste nur wirksam werden kann, wenn das innere Gehäuse 11 aus dem äußeren Gehäuse 21 ausgefahren ist. Damit hat die Taste 18.1, durch welche das Herausschieben oder Herausklappen des inneren Gehäuses 11 aus dem äußeren Gehäuse 12 ausgelöst wird, auch die Funktion der Sicherung gegen Fehlauslösungen.

Zusätzlich zu den schon weiter oben zum Ausführungsbeispiel von Fig. 1 beschriebenen Funktionen, weißt das Notrufgerät von Fig. 2 noch eine Fokussierunterstützung 9 auf. Diese sendet nach dem Drücken der Auslösetaste parallel zu jener Richtung, in welcher die Bildmitte des von der Kamera 2 aufgenommenen Bildes liegt, einen Lichtstrahl aus. Die Fokussierunterstützung 9 kann im Wesentlichen beispielsweise durch eine Laserdiode mit geringer, im sichtbaren Wellenspektrum liegender Lichtleistung, realisiert sein. Durch den Auftreffpunkt des Lichtstrahles in der Umgebung ist damit die Bildmitte des durch die Kamera 2 aufgenommen Bildes markiert. Da zu erwarten ist, dass die das Notrufgerät in Anspruch nehmende Person im Einsatzfall sehr nervös sein kann, kann diese Funktion sehr wertvoll sein.

Für die genaue Organisation der Geschehnisse im Notfall ist in den Dokumenten zum Stand der Technik schon eine Vielzahl von sinnvollen Vorschlägen und Variationsmöglichkeiten genannt. Auf Grund der Vielzahl von Organisationsmöglichkeiten ist es vorteilhaft das Notrufgerät mit einem externen Computer koppelbar auszuführen, sodass am externen Computer komfortabel zwischen verschiedenen möglichen Einstellungen gewählt werden kann und damit personenbezogene Daten eingespielt werden können ohne dass deswegen das Notrufgerät selbst viele Tasten und Funktionsmenüs aufzuweisen braucht.

Ohne jeden Anspruch auf Vollständigkeit seien als beispielhafte Themen für derartige Grundeinstellungen / personenbezogene Daten genannt:
- Wer ist der Inhaber des Gerätes (Name, Geschlecht, Geburtstag, Adresse, Identifikationsinformation für Krankenversicherung,...)
- Über welches Kommunikationsnetz ist die die entfernt befindliche Station erreichbar; welche Adresse (Telefonnummer) hat die Station?
- Gibt es eine/mehrere Ersatzstationen / Ersatznetze / Ersatzadressen falls die vorgereihte/vorgereihten entfernt befindliche Station/Stationen nicht erreichbar ist/sind?
- Verbindungsdaten der Ersatzstationen.
- Sind abgesehen von der entfernt befindlichen Station durch das Gerät selbst schon weitere Adressaten - wie z.B. Eltern - zu benachrichtigen?
   - Was wird an die zusätzlichen Adressaten gesandt? (Textnachricht, Positionsinformation, alle Aufnahmen,....)
- Was hat die entfernt befindliche, erreichte Station zu tun? Optionen:
   - Wer ist mit welchen Informationen (vorbereitete Texte, übermittelte aufgenommene Daten....) zu benachrichtigen?
   - Welcher Einsatzdienst (welche Polizeidienststelle, welche Rettungsdienststelle) ist ggf. zu benachrichtigen?
   - Was ist vor dem Auslösen eines Alarmes bei dem Einsatzdienst zu überprüfen? Optionen:
      - Nichts. Alarm wird sofort ausgelöst
      - übermittelte Daten beurteilen?
      - Person vor Ort anrufen und erst Alarm geben wenn dabei keine eindeutige Entwarnung kommt?
      - Alarm auslösen, wenn innerhalb einer bestimmten, vorab einzustellenden Frist keine Entwarnung kommt.
         - Wie hat die Entwarnung auszusehen? Optionen:
            - Codewort per SMS gesandt
            - Codewort per SMS von einem bestimmten Ort aus gesandt
- Wie hat das Notfallgerät im Akutfall vor Ort zu arbeiten? Optionen:
   - Optionen für die Arbeitsweise der vor Ort wirkenden Signaleinrichtung:
      - Unmittelbar nach Drücken des Auslöseknopfes die Signaleinrichtung starten?
      - Signaleinrichtung erst starten, wenn Verbindung zu entfernter Station hergestellt ist und erstes Datenpaket übermittelt wurde?
      - Signaleinrichtung geht automatisch in Betrieb und ist durch Zusatzknopf 3.1, 6.1 abstellbar
      - Signaleinrichtung geht von selbst nicht in Betrieb und ist durch Zusatzknopf 3.1, 6.1 einschaltbar.
      - Welche Art von Signalen werden gegeben? Optionen:
         - Optisch (unterschiedliche Lichter, welche z.B. an Einsatzdienste wie Rettung, Polizei, Feuerwehr erinnern können)
         - Akustisch
            - unterschiedliche Sirenentöne
            - unterschiedliche Textausgaben
               - in unterschiedlichen Sprachen Formulierungen durch welche erklärt wird, dass die Situation dokumentiert und gemeldet ist und dass Einsatzkräfte alarmiert sind.
               - Ergänzende Aufforderungen oder Mahnungen Ruhe zu bewahren
               - Laute Hilferufe

Bei einer vorteilhaften Organisationsform wird von der entfernt befindlichen Station aus als einer der ersten Schritte nach dem Eintreffen einer von einem Notfallgerät gesendeten Notfallmeldung, die das Notfallgerät innehabende Person angerufen. Wenn sich in dem Telefongespräch zweifelsfrei klären lässt, dass die Person allein mit der Situation zurechtkommt, wird keine weitere Alarmierung von Einsatzkräften oder auch von Vertrauenspersonen ausgelöst, andernfalls schon.

Auch die Details des dazu gehörenden Organisationsablaufes - Anwählen welcher Telefonnummer vor Ort, welche Dienste/Personen sind auf jeden Fall zu benachrichtigen / geheime Kennwörter welche entweder "Gefahr, brauche Hilfe unabhängig davon was ich sonst noch sage (stehe vor vorgehaltener Pistole)" oder "eindeutige Entwarnung" bedeuten ist am Besten per an das Notrufgerät gekoppeltem Computer in das Notrufgerät einzuprogrammieren.

Als Alternative zur Speicherung der Einstellungen im Notrufgerät gibt es natürlich auch die Möglichkeit, die Einstellungen je eindeutig identifizierbares Notrufgerät in der entfernt befindlichen Station zu speichern. Als Datenübertragungsgerät zu der Station zwecks Mitteilung der Einstellungen sollte aber schon das betreffende Notrufgerät selbst und nicht beispielsweise ein PC und das Internet dienen, da damit Manipulationen durch Dritte besser vermieden werden können.

Für den Fall, dass eingestellt ist, dass von der entfernt befindlichen Station die das Notrufgerät inne habende Person vor Ort angerufen werden soll (bevor weitere Alarme ausgelöst werden), sollte in der entfernt befindlichen Station die telefonische Anwahl der Person vor Ort automatisch erfolgen, damit diese Anwahl rasch und ohne Gefahr des Verwählens vonstatten gehen kann.

Es ist vorteilhaft, am Notrufgerät eine Zusatztaste anzubringen, durch welche -für die entfernt befindliche Station erkennbar - ein Test-Notruf abgesetzt werden kann. Damit soll ohne Gefahr von teuren Fehlalarmen die Möglichkeit geboten werden, die technischen Funktionen aller Komponenten auszuprobieren und Organisatorisches mit der entfernt befindlichen Station durch zu besprechen.

Das erfindungsgemäße Notrufgerät kann trotz der zahlreichen und vielfältig einstellbaren Funktionen die davon ausgelöst werden, selbst sehr einfach aufgebaut und bedienbar sein. Das ist von entscheidender Wichtigkeit, da ein Ernstfall erst Monate oder Jahre nach dem Kauf und einer anfänglichen Einschulung auf das Notrufgerät eintreten kann, also zu einem Zeitpunkt an dem das genauere Wissen der das Gerät inne habenden Person darüber schon etwas verblasst ist. Außerdem ist zu bedenken, dass diese Person im Ernstfall unter erheblichem Stress stehen kann und auch deswegen möglicherweise nicht in der Lage wäre, bei einem komplizierteren Gerät die richtige Taste richtig auszulösen.

Durch die am Ort des Geschehens selbst ankommenden, vom Notfallgerät abgegebenen Signale, können gefährliche Situationen entschärft oder vermieden werden.

## Patentansprüche

1. Für die automatische Dokumentation und Meldung von kriminellen Vorfällen einsetzbares Notrufgerät, welches
a. eine digitale Kamera und/oder ein Mikrofon mit damit zusammenwirkender, zur Aufnahme und Speicherung von optischer und/oder akustischer Information dienender Elektronik aufweist,
b. sowie eine Antenne und damit zusammenwirkende Elektronik um damit im Zusammenwirken mit einem satellitenbasierten Navigationssystem die eigene Position erkennen zu können,
c. sowie eine Antenne und damit zusammenwirkende Elektronik um eine Funkverbindung zu einer entfernt befindlichen Station herstellen zu können und automatisch aufgezeichnete Informationen und Informationen betreffend der eigenen geografischen Koordinaten an diese Station senden zu können,
d. wobei diese Mittel durch einen einfachen Knopfdruck an einer Auslösetaste startbar sind,
e. wobei das Notrufgerät weiters eine optische und/oder eine akustische Signaleinrichtung aufweist, durch welche an dem Ort an dem sich das Notrufgerät befindet, hörbar und/oder sichtbar auf die Funktion des Notrufgerätes hingewiesen wird,
**dadurch gekennzeichnet, dass**
f. das Notrufgerät Teil eines am Körper eines Menschen zu tragenden Bandes ist,
g. dass das Notrufgerät einen äußeren Gehäuseteil (21) und einen innerem Gehäuseteil (11) aufweist, wobei der innere Gehäuseteil (11) durch den äußeren Gehäuseteil umfassbar ist und relativ zum äußeren Gehäuseteil zwischen einer mehr und einer weniger umfassten Stellung beweglich ist und
h. wobei nur dann, wenn der innere Gehäuseteil (11) relativ zum äußeren Gehäuseteil (21) in der weniger umfassten Stellung ist, die Auslösetaste ausgelöst werden kann, um die für einen Akutfall vorgesehenen Funktionen des Notrufgerätes zu starten.

2. Notrufgerät nach Anspruch 1, **dadurch gekennzeichnet, dass** am äußeren Gehäuse (21) eine Zeitanzeige (10) angebracht ist, welche auch dann sichtbar ist, wenn sich das innere Gehäuse in der stärker umfassten Stellung befindet.

3. Notrufgerät nach Anspruch 1 oder 2, **dadurch gekennzeichnet, dass** es an einem im Bereich des Handgelenkes am Unterarm eines Menschen anzubringenden Armband (12) angebracht ist.

4. Notrufgerät nach Anspruch 3, **dadurch gekennzeichnet, dass** ein Bereich des inneren Gehäuses (11) bei der Bewegung in die weniger umfasste Stellung vom äußeren Gehäuse (21) heraus, von der Ebene des Armbandes (12) weg bewegt wird und dass die Auslösetaste (18) an jenem Bereich des inneren Gehäuses (11) angebracht ist, welcher in der weniger umfassten Stellung des inneren Gehäuses am weitesten vor. der Ebene des Armbandes (12) entfernt liegt.

## Claims

1. Emergency call device for the automatic documentation and reporting of criminal incidents, which
a. has a digital camera and/or a microphone with associated electronics for the recording and storage of video and/or audio information,
b. and an antenna and associated electronics to allow for determination of its own location in connection with a satellite-based navigation system,
c. and an antenna and associated electronics for establishing a radio connection to a remote-situated station and automatically sending recorded information and information about its geographic coordinates to this station,
d. whereby these instruments can be started by the press of a single button as a trigger button,
e. whereby the emergency call device further has a visual and/or audible signalling mechanism capable of visually and/or audibly indicating the functioning of the emergency call device at the location where the device is located,
**characterised in that**
f. the emergency call device is part of a band worn on the body of a person,
g. that the emergency call device has an outer housing part (21) and an inner housing part (11), whereby the inner housing part (11) can be encompassed by the outer housing part and is movable relative to the outer housing part between a position that is more encompassed and a position that is less encompassed, and
h. whereby only when the inner housing part (11) is in the less encompassed position relative to the outer housing part (21) can the trigger button be operated in order to start the functions of the emergency call device intended for a serious incident.

2. Emergency call device according to claim 1, **characterised in that** a time display (10) is affixed to the outer housing (21) that is still visible while the inner housing is in the more encompassed position.

3. Emergency call device according to claim 1 or 2, **characterised in that** it is affixed to an arm band (12) worn in the area of the wrist on the lower arm of a person.

4. Emergency call device according to claim 3, **characterised in that** an area of the inner housing (11), upon the movement into the position less encompassed by the outer housing (21), moves away from the level of the arm band (12) and that the trigger button (18) is affixed to the area of the inner housing (11) that lies farthest from the level of the arm band (12) while in the less encompassed position of the inner housing.

## Revendications

1. Appareil d'appel de détresse utilisable pour la documentation et la signalisation automatique d'incidents criminels
a. composé d'un appareil photo numérique et/ou d'un microphone avec l'électronique concourante avec ceux-ci et servant à l'enregistrement et à la mémorisation d'informations optiques et/ou acoustiques,
b. ainsi que d'une antenne et de l'électronique concourante pour pouvoir détecter la position actuelle avec le concours d'un système de navigation basé sur satellite,
c. ainsi que d'une antenne et de l'électronique concourante pour pouvoir établir une liaison radio avec une station éloignée et envoyer à cette station des informations enregistrées automatiquement et des informations concernant les propres coordonnées géographiques,
d. ces moyens pouvant être mis en marche par simple pression sur une touche de déclenchement,
e. l'appareil d'appel de détresse présentant, en outre, un dispositif de signaux optiques et/ou acoustiques qui indiquent de façon audible et/ou visible au lieu où se trouve l'appareil d'appel de détresse que celui-ci fonctionne,
**caractérisé en ce que**
f. l'appareil d'appel de détresse fait partie d'une sangle à porter au corps d'une personne,
g. l'appareil d'appel de détresse présente une partie extérieure de boîtier (21) et une partie intérieure de boîtier (11), la partie intérieure du boîtier (11) pouvant être saisie au moyen de la partie extérieure du boîtier et étant relativement mobile par rapport à la partie extérieure du boîtier entre une position plus et une position moins saisie, et
h. la touche de déclenchement peut uniquement être déclenchée lorsque la partie intérieure de boîtier (11) se trouve en position relative moins saisie par rapport à la partie extérieure du boîtier (21) pour engager le fonctionnement de l'appareil d'appel de détresse prévue pour un cas d'urgence.

2. Appareil d'appel de détresse selon la revendication 1, **caractérisé en ce qu'**un affichage de temps (10) est installé sur le boîtier extérieur (21), qui est également visible quand le boîtier intérieur se trouve en position plus fortement saisie.

3. Appareil d'appel de détresse selon la revendication 1 ou 2, **caractérisé en ce que** celui-ci est monté sur un bracelet (12) à attacher au poignet à l'avant-bras d'une personne.

4. Appareil d'appel de détresse selon la revendication 3, **caractérisé en ce qu'**une zone du boîtier intérieur (11) est déplacée lors du mouvement en position moins saisie hors du boîtier extérieur (21), à l'écart du niveau du bracelet (12) et que la touche de déclenchement (18) est installée dans la zone du boîtier intérieur (11) qui se trouve en position moins saisie du boîtier intérieur et le plus éloignée du niveau du bracelet (12).
